(19) Europäisches Patentamt / European Patent Office / Office européen des brevets

(11) **EP 1 786 668 B1**

(12) **FASCICULE DE BREVET EUROPEEN**

(45) Date de publication et mention
de la délivrance du brevet:
**16.01.2008 Bulletin 2008/03**

(21) Numéro de dépôt: 05787068.5

(22) Date de dépôt: **08.09.2005**

(51) Int Cl.:
***B64C 13/28*** *(2006.01)*

(86) Numéro de dépôt international:
**PCT/EP2005/054469**

(87) Numéro de publication internationale:
**WO 2006/029988 (23.03.2006 Gazette 2006/12)**

(54) **DISPOSITIF ANTI-RETOUR A DETECTION DE DEFAILLANCE**

NO-BACK-VORRICHTUNG MIT FEHLFUNKTIONSDETEKTION

NO-BACK DEVICE HAVING MALFUNCTION DETECTION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.09.2004 FR 0409562**

(43) Date de publication de la demande:
**23.05.2007 Bulletin 2007/21**

(73) Titulaire: **Goodrich Actuation Systems SAS
78530 Buc (FR)**

(72) Inventeurs:
• **PORT-ROBACH, Isabelle
F-95170 DEUIL LA BARRE (FR)**
• **MEDINA, Raphaël
F-95440 ECOUEN (FR)**

(74) Mandataire: **Callon de Lamarck, Jean-Robert et al
Cabinet Régimbeau
20, rue de Chazelles
75847 Paris cedex 17 (FR)**

(56) Documents cités:
**EP-A- 1 378 685          SU-A1- 805 099
US-A- 4 256 277          US-A- 4 762 205
US-A- 5 582 390**

**EP 1 786 668 B1**

### Description

L'invention est relative à un dispositif de freinage anti-retour pour un dispositif d'actionnement d'un organe mobile, notamment pour commande de vol d'aéronef.

Elle trouve en particulier avantageusement application dans le cadre de l'actionnement d'un élément de réglage de plan horizontal sur un avion (gouverne de profondeur), d'autres applications étant néanmoins possibles.

Un tel dispositif anti-retour est plus précisément connu sous la terminologie anglo-saxonne de dispositif « no-back ».

L'actionnement d'un organe mobile d'aéronef peut être réalisé à l'aide d'un système de vérin à vis disposant généralement de deux attaches : une attache dite attache avion par laquelle la vis est liée à la structure de l'aéronef et une attache dite attache structure par laquelle la vis est liée via un écrou à l'organe mobile à actionner.

D'une manière générale, le rôle d'un dispositif anti-retour est d'éliminer l'effet de toute force qui, agissant sur l'écrou, tend à s'opposer ou à favoriser la rotation normale de la vis.

En effet, s'il était permis à une charge d'agir contre le couple d'entrée appliqué à la vis, il faudrait alors appliquer un couple d'entrée plus grand ce qui exigerait en particulier un moteur d'entrée plus grand et plus lourd.

Réciproquement, un couple d'aide agissant sur le couple d'entrée appliqué à la vis fournirait de l'énergie mais occasionnerait également des difficultés en ce qui concerne le réglage de la vitesse ainsi que le maintien de la position du dispositif d'actionnement.

Un dispositif anti-retour permet en particulier d'empêcher la vis d'entrer en rotation sous l'effet d'une charge aérodynamique axiale de traction ou de compression s'exerçant sur l'écrou. Toute force ayant pour effet d'aider le couple d'entrée qui est appliquée à la vis ou de s'opposer à ce couple est alors éliminée. Le document US-A-4 762 205 décrit un dispositif anti-retour et un procédé de détermination de l'état de fonctionnement d'un dispositif anti-retour comprenant toutes les caractéristiques des préambules des revendications indépendantes 1 et 8.

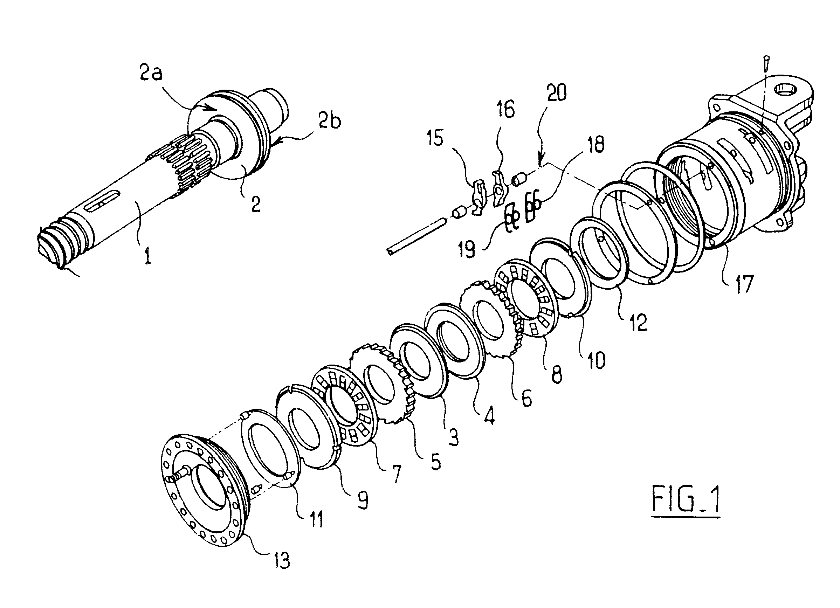

On trouvera plus loin, notamment en regard des figures 1 à 3, une description plus détaillée du fonctionnement d'un dispositif anti-retour conventionnel.

Une défaillance d'un dispositif anti-retour est potentiellement dangereuse puisque l'arbre de la vis pourrait alors être entraîné par les forces aérodynamiques agissant sur l'organe mobile à actionner. L'organe mobile pourrait ne pas être maintenu dans la position désirée et pourrait alors flotter, ce qui rendrait l'aéronef instable.

Il a par ailleurs été prévu un dispositif d'actionnement dans lequel la fonction du dispositif anti-retour est redondante et peut être reprise, en cas de défaillance de celui-ci, par une chaîne secondaire de pignon qui maintient la position de l'écrou à l'aide d'une boucle d'asservissement.

Un tel dispositif, certes sécuritaire, présente toutefois le danger qu'un fonctionnement reposant seulement sur la chaîne de pignon secondaire, après défaillance de la fonction anti-retour primaire, ne soit pas détecté.

Le dispositif d'actionnement ne comporterait plus alors son niveau de sécurité supplémentaire, et perdrait par là son intérêt initial.

En outre, la simple rupture de la chaîne de pignon secondaire entraînerait la perte de l'attache entre la structure de l'aéronef et l'organe mobile à actionner, et donc une situation catastrophique.

Il existe donc un besoin pour que soit détecté la défaillance (de la fonction primaire) d'un dispositif anti-retour, en particulier afin que soit évité un fonctionnement, reposant sur la chaîne secondaire, selon un mode de panne dormante.

L'invention a pour objectif de combler ce besoin et propose à cet effet, selon un premier aspect, un dispositif anti-retour pour un dispositif d'actionnement d'organe mobile comportant un arbre à vis, comprenant des premiers et seconds moyens formant frein comportant chacun une roue à rochet, les roues à rochet étant montées en opposition l'une par rapport à l'autre de sorte que les premiers moyens formant frein sont adaptés pour résister à un mouvement non désiré de l'arbre à vis dans une première direction et les seconds moyens formant frein sont adaptés pour résister à un mouvement non désiré de l'arbre à vis dans une direction opposée,
et des moyens de détection de l'état de la rotation des roues à rochet,
le dispositif anti-retour étant caractérisé en ce qu'il comporte en outre

- des moyens de signalement prévus pour fournir, en fonction de l'état de la rotation des roues, une indication relative à l'état de fonctionnement du dispositif anti-retour, les moyens de signalement comportant des moyens de comparaison adaptés pour réaliser une comparaison de l'état de la rotation de chacune des roues, et des moyens d'alerte adaptés pour fournir une indication de défaillance dans le cas où les états de rotation comparés sont identiques.

Des aspects préférés, mais non limitatifs du dispositif anti-retour selon la premier aspect de l'invention sont les suivants :

- les moyens de détection peuvent être adaptés pour déterminer, pour chaque roue, si ladite roue est immobile ou entraînée en rotation ;

- les roues à rochet étant réalisées en matériau ferromagnétique, les moyens de détection peuvent comprendre une paire de capteurs inductifs, chaque capteur étant agencé à la périphérie d'une roue à rochet de manière adaptée pour que le champ magnétique induit dans le capteur soit sensible à la variation d'entrefer entre ledit capteur et ladite roue ;
- l'entrefer varie selon que le capteur est situé en face du sommet d'une dent ou en face de la base d'une dent de la roue à rochet ;
- les moyens de détection peuvent également comprendre des moyens de traitement associés aux capteurs et adaptés pour déterminer, en fonction des variations du champ magnétique induit, pour chaque roue si celle-ci est immobile ou entraînée en rotation ;
- les moyens de détection peuvent comporter, pour chaque roue, des moyens adaptés pour détecter le mouvement d'au moins un cliquet associé à ladite roue, de sorte que l'immobilité d'un cliquet caractérise une roue immobile, et que la mobilité d'un cliquet caractérise une roue entraînée en rotation ;

Selon un autre aspect, l'invention concerne un dispositif d'actionnement d'organe mobile, notamment pour commande de vol d'aéronef, comportant un dispositif anti-retour selon un mode de réalisation possible du premier aspect de l'invention.

Selon encore un autre aspect, l'invention concerne un procédé de détermination de l'état de fonctionnement d'un dispositif anti-retour mettant oeuvre une détection de l'état de la rotation des roues à rochet et un signalement de l'état de fonctionnement du dispositif anti-retour en fonction de ladite détection.

D'autres caractéristiques, buts et avantages de l'invention apparaîtront à la lecture de la description détaillée qui va suivre, et au regard des dessins annexés, donnés à titre d'exemples non limitatifs et sur lesquels :

- la figure 1 représente une vue en perspective éclatée d'un dispositif anti-retour conventionnel ainsi qu'une vue en perspective d'un arbre à vis avec lequel le dispositif anti-retour est destiné à coopérer ;
- les figures 2 et 3 représentent des vues en coupe du dispositif anti-retour conventionnel monté en coopération avec un arbre à vis ;
- la figure 4 représente une vue en coupe d'un dispositif selon un mode de réalisation préféré de l'invention

On rappelle ci-après le principe de fonctionnement d'un dispositif anti-retour « no-back » conventionnel.

Comme énoncé précédemment, un dispositif anti-retour a pour rôle d'empêcher la vis d'entrer en rotation sous l'effet d'une charge aérodynamique appliquée sur l'écrou.

La figure 1 représente une vue en perspective éclatée des différentes pièces constituant un dispositif anti-retour conventionnel ainsi qu'une vue en perspective d'un arbre à vis 1 avec lequel le dispositif anti-retour est destiné à coopérer.

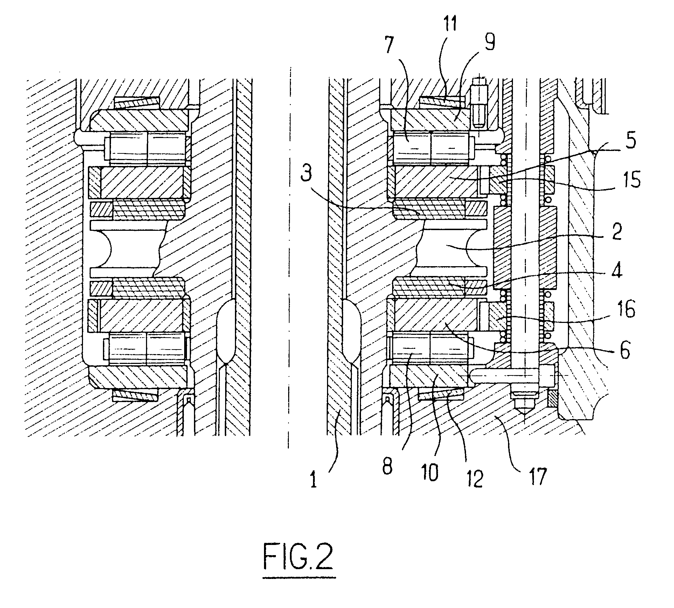

La figure 2 représente quant à elle une vue en coupe du dispositif anti-retour conventionnel monté en coopération avec ledit arbre à vis 1.

La vis 1 est munie d'un élément de frein 2 fixé en vue d'une rotation avec la vis et ayant la forme d'une collerette s'étendant latéralement par rapport à l'axe de la vis, présentant des faces latérales 2a et 2b et destiné à s'intercaler entre des moyens formant frein du dispositif anti-retour.

Le dispositif anti-retour comporte effectivement une paire de moyens formant frein, chacun desdits moyens étant destiné à être agencé d'un côté et de l'autre de l'élément de frein 2.

Le dispositif anti-retour est ainsi bi-directionnel en ce qu'il comprend un premier moyen formant frein adapté pour résister à un mouvement non désiré de l'arbre à vis dans une première direction et un second moyen formant frein adapté pour résister à un mouvement non désiré de l'arbre à vis dans une direction opposée.

Ces moyens de frein sont configurés pour appliquer de la friction de freinage contre l'une ou l'autre des faces latérales 2a, 2b de l'élément de frein 2 en réponse à une charge en compression ou en tension exercée sur l'arbre à vis via l'écrou.

Chacun des moyens de frein comporte une roue à rochet 5 (respectivement 6) en appui sur une butée à rouleaux 7 (resp. 8) agencée pour pouvoir rouler sur une piste de roulement 9 (resp. 10).

Un disque 3 de friction (resp. 4), par exemple un disque en carbone, est pris en sandwich entre la roue à rochet 5 (resp. 6) et une face 2a (resp. 2b) axiale de l'élément de freinage 2.

On précise ici que les roues à rochet peuvent être réalisées en un matériau ferromagnétique.

Des ressorts de précharge 11, 12 viennent maintenir en contact toutes les pièces susmentionnées qui sont accueillies dans un carter 17 fermé par une pièce de fermeture 13.

Des cliquets de roue dentée, montées sur un axe 20, sont représentés sous les références 15 et 16. Les cliquets 15, 16 sont destinés à coopérer avec les dents d'une roue à rochet 5, 6 de manière à n'autoriser la rotation de la roue que dans un seul sens. Des ressorts 18, 19 sont plus précisément prévus pour venir plaquer chaque cliquet 15, 16 contre une dent de la roue à rochet 5, 6 correspondante.

Les roues à rochet 5, 6 sont par ailleurs montées en opposition, c'est-à-dire que le sens de rotation autorisé pour une roue est opposé au sens de rotation autorisé pour l'autre roue.

Sous l'action d'une charge axiale, l'élément de frein 2 de la vis 1 va s'appuyer sur un disque de friction qui repose sur une roue à rochet, elle-même en appui sur une butée à rouleaux.

L'ensemble constitué par les pièces élément de frein - disque de friction - roue à rochet devient alors solidaire en rotation par friction.

Lorsque le mouvement de la vis provoque le déplacement de l'écrou dans le même sens que celui produit par l'effet de la charge axiale sur la vis, la roue à rochet sur laquelle vient s'appliquer l'effort est bloquée en rotation par les cliquets qui sont plaqués contre ses dents. L'autre roue à rochets tourne quant à elle librement en faisant basculer les cliquets qui lui sont associés.

Dans ce cas, afin de pouvoir actionner l'organe mobile, il faut vaincre le couple Cf de friction du dispositif anti-retour (c'est-à-dire le couple de frottement de l'élément de frein de la vis sur le disque de friction), mais on est aidé pour cela par le couple Cc induit par la charge axiale.

Le couple devant être fourni à la vis doit être supérieur au couple Cv défini selon Cv = Cp + Cf - Cc, ou encore selon :

$$Cv = Cp + \phi Frm - \frac{Fp\eta vi}{2\pi}$$

où Cp représente le couple permanent résiduel du dispositif anti-retour,
$\phi$ le coefficient de frottement, rm le rayon moyen des disques de friction
F la charge de l'écrou sur la vis, P le pas de la vis,
$\eta vi$ le rendement indirect de la vis à bille et $\eta$ le rendement direct de la vis à bille.

Lorsque le mouvement de la vis provoque le déplacement de l'écrou en sens inverse de celui produit par l'effet de la charge axiale sur la vis, la roue à rochet sur laquelle vient s'appliquer l'effort n'est pas bloquée en rotation tandis que l'autre est bloquée.

Dans ce cas, le couple devant être appliquée à la vis doit être suffisant pour contrer le couple Cc induit sur la vis sous l'effet de la charge axiale, auquel s'ajoute le couple Cp permanent résiduel du no-back.

Afin de pouvoir actionner l'organe mobile, le couple devant être fourni à la vis doit être supérieur au couple Cv permettant de vaincre la charge et défini selon Cv = Cp + Cc, ou encore selon :

$$Cv = Cp + \frac{Fxp}{2\pi x\eta}.$$

Bien entendu, on comprend que lorsque le sens de la charge axiale s'inverse, l'élément de frein de la vis va s'appuyer sur le disque de friction opposé. Les roues dentées étant montées en opposition, l'inversion du sens de la charge va donc entraîner les mêmes conditions de fonctionnement que celles décrites au dessus.

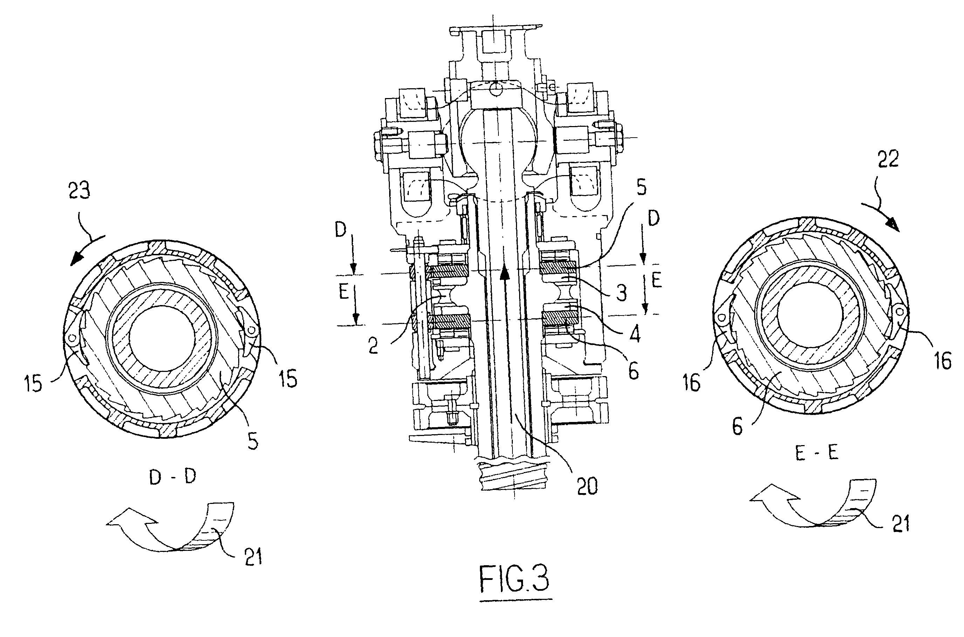

Considérons par exemple un fonctionnement sous une charge en compression, comme cela est représenté sur la figure 3 par la flèche référencée 20, figure sur laquelle on a conservé, pour les mêmes éléments, les mêmes références que sur les figures 1 et 2.

Les flèches 21 indiquent le sens de la rotation induite sur la vis par la charge axiale.

Dans ce cas de figure, la roue à rochet supérieure 5, représentée sur la gauche de la figure, selon la coupe D-D, est bloquée en rotation par les cliquets 15, et ne peut tourner que dans le sens indiqué par la flèche 23.

La roue à rochet inférieure 6, représentée sur la droite de la figure, selon la coupe E-E, est montée en opposition par rapport à la roue à rochet supérieure 5, et, bloquée en rotation par les cliquets 16, ne peut donc tourner que dans le sens opposé, indiqué par la flèche 22, qui est ici identique au sens de la rotation induite par la charge axiale (cf. flèche 21).

Lorsque le mouvement de la vis provoque le déplacement de l'écrou dans le sens de la charge, l'élément de frein 2 et le disque en carbone supérieur 3 glissent sur la roue à rochet supérieure 5 qui est immobile tandis que la roue à rochet inférieure 6 tourne.

Cette rotation est due à l'effort du ressort de précontrainte inférieur 12 qui plaque la roue à rochet inférieure 6 contre le disque de friction inférieur 4 et donc contre l'élément de frein 2.

Lorsque le mouvement de la vis provoque le déplacement de l'écrou dans le sens opposé à celui de la charge, la roue à rochet supérieure 5 peut alors tourner tandis que la roue à rochet inférieure 6 ne peut pas tourner (l'élément de freinage 2 de la vis, le disque de friction inférieur 4 et la roue à rochet inférieure 6 étant solidaires par friction en rotation sous l'effet du ressort de précharge).

Finalement, on aura bien compris qu'en mode de fonctionnement normal, il y a toujours une roue à rochets qui tourne tandis que l'autre reste immobile.

L'invention propose d'exploiter cette propriété afin de permettre la détermination de l'état de fonctionnement du dispositif anti-retour, et en particulier l'éventuelle défaillance de la fonction primaire. Différentes causes sont ci-après détaillées qui conduisent à la défaillance de la fonction primaire, et par conséquent à un risque de voir le dispositif fonctionner dans un mode de panne dormante.

Considérons à titre d'exemple une charge en compression et un actionnement dans le sens de la charge. Comme discuté précédemment, la roue à rochet supérieure reste immobile tandis que la roue à rochet inférieure tourne en ouvrant les cliquets qui lui sont associés.

La rotation de la roue à rochet inférieure est due à l'effort du ressort de précontrainte qui plaque ladite roue à rochet contre le disque de friction inférieur et donc contre l'élément de frein lié à la vis. Les moyens de frein comportant ladite roue inférieure sont ainsi solidaires, sous l'effort du ressort de précontrainte, avec l'élément de frein selon une friction en rotation caractérisée par un coefficient de frottement $\mu$.

Le couple de la roue à rochet inférieure est par conséquent proportionnel à la pré-charge du ressort de précontrainte inférieur, au rayon moyen du disque de friction inférieur et audit coefficient de frottement $\mu$.

Le couple à fournir à la roue à rochet inférieure pour autoriser sa rotation doit être supérieur au couple requis pour permettre de soulever les cliquets en venant agir à l'encontre des ressorts de maintien prévus pour plaquer les cliquets contre la roue.

On comprend donc qu'il faut un coefficient de frottement suffisant, supérieur à un coefficient de frottement donné (fonction notamment de la tension appliquée par les ressorts de maintien de cliquets) pour que la roue à rochet puisse soulever les cliquets et entrer en rotation.

Dès lors, en cas de détérioration du frottement, il se peut que le couple fourni à la roue à rochet ne soit pas suffisant pour permettre de soulever les cliquets et la roue à rochet n'entre pas alors en rotation.

On mentionne également ici la défaillance liée à l'usure du disque de friction. Dans ce cas, le jeu entre l'élément de frein de la vis et le disque augmente, la précharge du ressort de précontrainte diminue et le couple fourni à la roue à rochet inférieur peut être inférieur au couple minimal à fournir pour soulever les cliquets et autoriser la rotation.

Dans les deux cas de figure mentionnés ci-dessus, les deux roues à rochet sont alors immobiles et le dispositif anti-retour est défaillant.

On mentionne ci-après un autre type de défaillance pouvant survenir, à savoir une perte de l'engagement des cliquets responsables du fonctionnement unidirectionnel de l'une des roues à rochet.

Considérant comme précédemment une charge en compression et un actionnement dans le sens de la charge, la rotation de la roue à rochet supérieure est empêchée du fait de l'action des cliquets associés à cette roue. Toutefois, en cas de casse de ces cliquets, ou de rupture de l'axe ou des dents de la roue, la rotation de la roue supérieure ne peut être prévenue. Les deux roues tournent alors en même temps.

Le tableau ci-après récapitule l'état de la rotation des roues à rochet sous l'effet d'une charge en compression, en fonction des types de défaillance présentés ci-dessus.

| Type de défaillance | | Mode d'actionnement | |
|---|---|---|---|
| | | Actionnement dans le sens de la charge | Actionnement dans le sens inverse de la charge |
| Aucune | Roue à rochet supérieure | Fixe | En rotation |
| | Roue à rochet inférieure | En rotation | Fixe |
| Perte de frottement du côté de la roue à rochet inférieure | Roue à rochet supérieure | Fixe | En rotation |
| | Roue à rochet inférieure | Fixe | Fixe |
| Perte de l'engagement des cliquets pour la roue à rochet supérieure | Roue à rochet supérieure | En rotation | En rotation |
| | Roue à rochet inférieure | En rotation | Fixe |

Comme on l'a vu précédemment, en mode de panne, il se peut que les deux roues tournent simultanément, ou bien qu'elles soient toutes les deux fixes, alors qu'en mode de fonctionnement normal une roue tourne pendant que l'autre est fixe.

Le dispositif anti-retour selon l'invention est similaire à un dispositif anti-retour conventionnel du type présenté ci-dessus sauf en ce qu'il comporte en outre des moyens de détection de l'état de la rotation des roues à rochet, et des moyens de signalement prévus pour fournir, en fonction de l'état ainsi détecté de la rotation des roues, une indication relative à l'état de fonctionnement du dispositif anti-retour.

Les moyens de détection de l'état de rotation des roues à rochet sont plus précisément adaptés pour déterminer, pour chaque roue, si celle-ci est immobile ou bien en rotation.

La détection réalisée par les moyens de détection est exploitée par lesdits moyens de signalement prévus pour fournir une indication relative à l'état de fonctionnement du dispositif anti-retour. Plus précisément lesdits moyens de signalement comportent des moyens de comparaison adaptés pour réaliser une comparaison de l'état de rotation de chacune des roues, et des moyens d'alerte adaptés pour fournir une indication de défaillance dans le cas où les états de rotation comparés sont identiques.

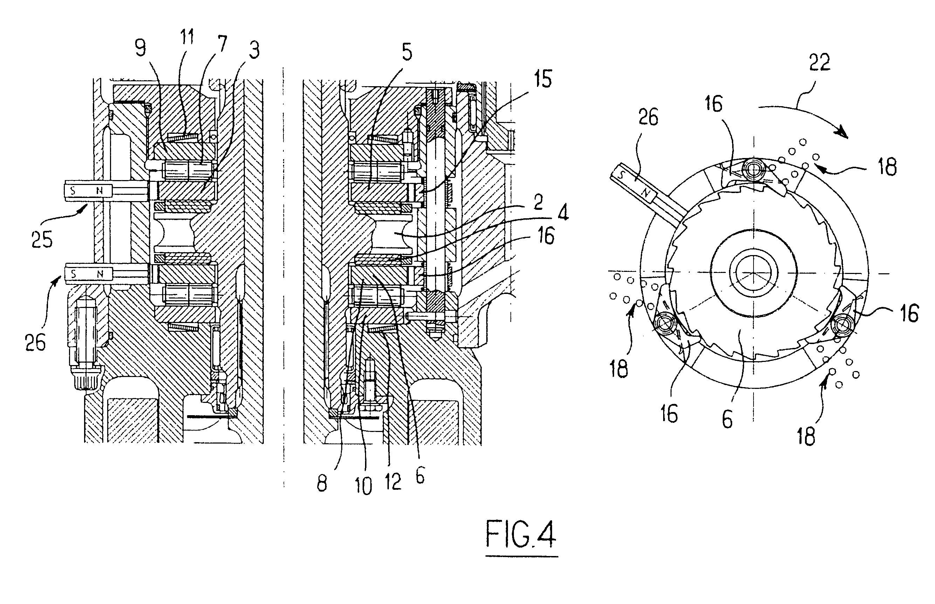

Selon un mode de réalisation préféré de l'invention, illustré par la figure 4, les moyens de détection comprennent deux capteurs inductifs, chaque capteur 25, 26 étant associé à une roue à rochet 5, 6, réalisée ici en matériau ferromagnétique.

Plus précisément, chaque capteur 25, 26 est intégré au dispositif anti-retour à la périphérie de la roue à rochet 5, 6 à laquelle il est associée, dans le plan formée par ladite roue à rochet de manière à s'étendre radialement par rapport à l'axe de la vis.

La vue en coupe de la roue à rochet 6 et du capteur 26 à droite sur la figure 4 représente plus précisément cet agencement.

Chaque capteur inductif envoie un champ magnétique issu d'un aimant permanent qui traverse une bobine.

La roue à rochet étant en matériau ferromagnétique, lorsque celle-ci passe devant le capteur inductif qui lui est associé, une tension est générée dans la bobine qui est directement proportionnelle aux variations du flux.

Le champ magnétique est en particulier sensible aux variations d'entrefer entre le capteur et la roue à rochet. Lorsque le capteur est en face du sommet d'une dent de la roue, le champ magnétique induit un courant dans les bobines. Lorsque le capteur est en face d'une base d'une dent, la reluctance augmente ce qui perturbe le champ magnétique.

L'observation des variations du champ magnétique permet en conséquence de caractériser l'état de la rotation de la roue à rochet.

En particulier, le champ magnétique induit est constant lorsque la roue est fixe alors qu'il varie selon les variations d'entrefer lorsque la roue est entraînée en rotation.

Les moyens de détection de l'état de la rotation des roues à rochet comportent également des moyens de traitement associés aux capteurs de manière à déterminer, en fonction des variations du champ magnétique induit, pour chaque roue si celle-ci est immobile ou entraînée en rotation.

Bien entendu l'invention n'est aucunement limitée à l'utilisation de capteurs inductifs, d'autres types de capteurs pouvant être utilisés afin de constater l'état de la rotation des roues à rochet.

Par ailleurs l'invention n'est pas limitée à l'observation des roues en elles-mêmes mais s'étend à l'observation de toutes pièces associées à une roue (notamment cliquets ou ressorts de maintien de cliquets) amenées à prendre un état différent selon que la roue est fixe ou entraînée en rotation.

Les moyens de détection peuvent ainsi, selon un autre mode de réalisation possible de l'invention, être adaptés pour détecter le(s) mouvements d'un (ou plusieurs) cliquet(s) associé(s) à une roue. Un cliquet immobile caractérise effectivement une roue fixe, là où un cliquet mobile caractérise une roue entraînée en rotation.

Par ailleurs, on mentionne ici que les moyens de signalement peuvent également être prévus pour fournir, en fonction de l'état de rotation des roues, une information permettant de caractériser une éventuelle défaillance du dispositif anti-retour. A titre d'exemple, et en se reportant au tableau donné ci-dessus, il est en effet possible de déduire, en cas de charge en compression, une perte de frottement du côté de la roue inférieure, lorsque les moyens de détection détectent que les deux roues sont fixes. De manière similaire, il est possible de déduire, en cas de charge en compression, une perte de l'engagement des cliquets de la roue supérieure, lorsque les moyens de détection détectent que les deux roues sont en rotation.

Selon un autre aspect, l'invention concerne également un procédé de détermination de l'état de fonctionnement d'un dispositif anti-retour mettant en oeuvre, comme cela a été décrit précédemment, une détection de l'état de la rotation des roues à rochet et un signalement de l'état de fonctionnement du dispositif anti-retour en fonction de ladite détection.

**Revendications**

**1.** Dispositif anti-retour pour un dispositif d'actionnement d'organe mobile comportant un arbre à vis, comprenant :

- des premiers (3, 5, 7, 9, 11, 15, 19) et seconds (4, 6, 8, 10, 12, 16, 18) moyens formant frein comportant chacun une roue à rochet (5, 6), les roues étant montées en opposition l'une par rapport à l'autre de sorte que les premiers moyens formant frein sont adaptés pour résister à un mouvement non désiré de l'arbre dans une première direction et les seconds moyens formant frein sont adaptés pour résister à un mouvement non désiré de l'arbre dans une direction opposée,
- des moyens de détection (25, 26) de l'état de la rotation de chacune des roues (5, 6)

le dispositif étant **caractérisé en ce qu'**il comporte en outre des moyens de signalement prévus pour fournir une indication relative à l'état de fonctionnement du dispositif anti-retour, lesdits moyens de signalement comportant des moyens de comparaison de l'état de rotation de chacune des roues et des moyens d'alerte pour fournir une indication de défaillance dans le cas où les états de rotation comparés sont identiques.

2. Dispositif selon la revendication précédente, **caractérisé en ce que** les moyens de détection sont adaptés pour déterminer, pour chaque roue, si ladite roue est immobile ou entraînée en rotation.

3. Dispositif selon l'une des deux revendications précédentes, dans lequel les roues à rochet sont réalisées en matériau ferromagnétique, **caractérisé en ce que** les moyens de détection comprennent une paire de capteurs inductifs (25, 26), chaque capteur étant agencé à la périphérie d'une roue à rochet (5, 6) de manière adaptée pour que le champ magnétique induit dans le capteur soit sensible à la variation d'entrefer entre ledit capteur et ladite roue.

4. Dispositif selon la revendication 3, **caractérisé en ce que** chaque capteur est agencé de sorte que l'entrefer varie selon que le capteur est situé en face du sommet d'une dent ou en face de la base d'une dent de la roue à rochet.

5. Dispositif selon l'une des revendications 3 ou 4, **caractérisé en ce que** les moyens de détection comprennent également des moyens de traitement associés aux capteurs et adaptés pour déterminer, en fonction des variations du champ magnétique induit, pour chaque roue si celle-ci est immobile ou entraînée en rotation.

6. Dispositif selon l'une des revendications précédentes, **caractérisé en ce que** les moyens de signalement sont également adaptés pour fournir une information permettant de caractériser une défaillance du dispositif anti-retour.

7. Dispositif d'actionnement d'organe mobile, notamment pour commande de vol d'aéronef, comportant un dispositif anti-retour selon l'une des revendications précédentes.

8. Procédé de détermination de l'état de fonctionnement d'un dispositif anti-retour pour un dispositif d'actionnement d'organe mobile d'aéronef comportant un arbre à vis, le dispositif anti-retour comprenant des premiers (3, 5, 7, 9, 11, 15, 19) et seconds (4, 6, 8, 10, 12, 16, 18) moyens formant frein comportant chacun une roue à rochet (5, 6), les roues étant montées en opposition l'une par rapport à l'autre de sorte que les premiers moyens formant frein sont adaptés pour résister à un mouvement non désiré de l'arbre à vis dans une première direction et les seconds moyens formant frein sont adaptés pour résister à un mouvement non désiré de l'arbre à vis dans une direction opposée,
le procédé mettant en oeuvre une détection de l'état de la rotation des roues à rochet, et un signalement de l'état de fonctionnement du dispositif anti-retour en fonction de ladite détection
le procédé étant **caractérisé en ce que** le signalement est mis en oeuvre en comparant l'état de la rotation de chacune des roues et en fournissant une indication de défaillance dans le cas où les états de rotation comparés sont identiques.

## Claims

1. A no-back device for an actuating device for a mobile element having a screw type actuating shaft, including:

   - first (3, 5, 7, 9, 11, 15, 19) and second (4, 6, 8, 10, 12, 16, 18) braking means, each of which having a ratchet wheel (5, 6), the wheels being mounted in opposition to each other so that the first braking means are designed to resist an unwanted movement of the shaft in a first direction, and the second braking means are designed to resist an unwanted movement of the shaft in an opposite direction,
   - means (25, 26) for detecting the rotation status of each of the wheels (5, 6)

the device being **characterised in that** it further includes indicating means provided to provide an indication relating to the operational status of the no-back device, the said indicating means including means to compare the rotation status of each of the wheels, and alert means to provide an indication of failure in the case where the compared rotation states are identical.

2. The device according to the previous claim, **characterised in that** the detection means are designed to determine, for each wheel, whether the said wheel is stationary or driven in rotation.

3. The device according to either of the two previous claims, wherein the ratchet wheels (5, 6) are made from a ferromagnetic material, **characterised in that** the detecting means include a pair of inductive sensors (25, 26), each sensor being located at the periphery of a ratchet wheel (5, 6) in a manner designed so that the magnetic field induced in the sensor is sensitive to the variation of the magnetic gap between the said sensor and the said wheel.

4. The device according to claim 3, **characterised in that** each sensor is located so that the magnetic gap varies according to whether the sensor is opposite to the top of a tooth or opposite to the base of a tooth of the ratchet wheel.

5. The device according to one of claims 3 or 4, **characterised in that** the detection means also include processing means associated with the sensors, and designed to determine, for each wheel as a function of the variations of the induced magnetic field, whether the wheel is stationary or driven in rotation.

6. The device according to one of the previous claims, **characterised in that** the indicating means are also designed to provide information that is used to characterise a failure of the no-back device.

7. An actuating device for a mobile element, in particular to control the flight of an aircraft, having a no-back device according to one of the preceding claims.

8. A method for determining the operational status of a no-back device for an actuating device for a mobile element of an aircraft, having a screw type actuating shaft, the no-back device including first (3, 5, 7, 9, 11, 15 19) and second (4, 6, 8, 10, 12, 16, 18) braking means, each of which having a ratchet wheel (5, 6), the wheels being mounted in opposition to each other so that the first braking means are designed to resist an unwanted movement of the screw type actuating shaft in a first direction, and the second braking means are designed to resist an unwanted movement of the screw type actuating shaft in an opposite direction,
this method including a detection of the rotation status of the ratchet wheels, and an indication of the operational status of the no-back device as a function of the said detection,
this method being **characterised in that** the indication is generated by comparing the rotation status of each of the wheels, and then providing an indication of failure in the case where the compared rotation states are identical.

**Patentansprüche**

1. Anti-Umkehr-Vorrichtung für eine eine Schneckenwelle umfassende Betätigungsvorrichtung eines beweglichen Elements, umfassend:

   - erste (3, 5, 7, 9, 11, 15, 19) und zweite (4, 6, 8, 10, 12, 16, 18) eine Bremse bildende Mittel, von denen jedes ein Ratschenrad (5, 6) umfasst, wobei die Räder zueinander gegenläufig montiert sind, damit die ersten, eine Bremse bildenden Mittel ausgelegt sind, sich einer unerwünschten Bewegung der Welle in eine erste Richtung zu widersetzen und die zweiten, eine Bremse bildenden Mittel ausgelegt sind, sich einer unerwünschten Bewegung der Welle in eine entgegengesetzte Richtung zu widersetzen,
   - Mittel zum Detektieren (25, 26) des Zustands der Rotation jedes der Räder (5,6)

   wobei die Vorrichtung **dadurch gekennzeichnet ist, dass** sie ferner Signalisierungsmittel umfasst, die vorgesehen sind, eine Anzeige bezüglich des Betriebszustands der Anti-Umkehr-Vorrichtung bereitzustellen, wobei die Signalisierungsmittel Mittel zum Vergleich des Rotationszustands jedes der Räder umfassen, sowie Alarmmittel, um eine Störungsanzeige in dem Fall bereitzustellen, bei dem die verglichenen Rotationszustände identisch sind.

2. Vorrichtung gemäß dem vorhergehenden Anspruch, **dadurch gekennzeichnet, dass** die Detektierungsmittel ausgelegt sind, für jedes Rad zu bestimmen, ob das Rad bewegungslos ist oder rotationsmäßig angetrieben wird.

3. Vorrichtung gemäß einem der vorhergehenden Ansprüche, bei dem die Ratschenräder aus ferromagnetischem Material hergestellt sind, **dadurch gekennzeichnet, dass** die Detektierungsmittel ein Paar induktiver Sensoren (25, 26) umfassen, wobei jeder Sensor im Umkreis eines Ratschenrads (5,6) so angeordnet ist, dass das in dem Sensor induzierte magnetische Feld empfindlich bezüglich der Luftspaltänderung zwischen dem Sensor und dem Rad ist.

4. Vorrichtung gemäß Anspruch 3, **dadurch gekennzeichnet, dass** jeder Sensor so angeordnet ist, dass der Luftspalt sich ändert, je nachdem, ob der Sensor gegenüber der Spitze eines Zahns oder gegenüber der Basis eines Zahns des Ratschenrads gelegen ist.

5. Vorrichtung gemäß einem der Ansprüche 3 oder 4, **dadurch gekennzeichnet, dass** die Detektierungsmittel auch zu den Sensoren gehörige Verarbeitungsmittel umfassen und ausgelegt sind, in Abhängigkeit der Änderungen des induzierten magnetischen Felds für jedes Rad zu bestimmen, ob dieses bewegungslos ist oder rotationsmäßig angetrieben wird.

6. Vorrichtung gemäß einem der vorhergehenden Ansprüche, **dadurch gekennzeichnet, dass** die Signalisierungsmittel auch ausgelegt sind, eine Information bereitzustellen, die es erlaubt, eine Störung der Anti-Umkehr-Vorrichtung zu charakterisieren.

7. Betätigungsvorrichtung eines beweglichen Elements, insbesondere zur Flugsteuerung eines Luftfahrzeugs, welches eine Anti-Umkehr-Vorrichtung gemäß einem der vorhergehenden Ansprüche umfasst.

8. Verfahren zur Bestimmung des Betriebszustands einer Anti-Umkehr-Vorrichtung für eine eine Schneckenwelle umfassende Betätigungsvorrichtung eines beweglichen Elements eines Luftfahrzeugs, wobei die Anti-Umkehr-Vorrichtung erste (3, 5, 7, 9, 11, 15, 19) und zweite (4, 6, 8, 10, 12, 16, 18) eine Bremse bildende Mittel umfasst, von denen jedes ein Ratschenrad (5,6) umfasst, wobei die Räder zueinander gegenläufig montiert sind, damit die ersten, eine Bremse bildenden Mittel ausgelegt sind, sich einer unerwünschten Bewegung der Schneckenwelle in eine erste Richtung zu widersetzen und die zweiten, eine Bremse bildenden Mittel ausgelegt sind, sich einer unerwünschten Bewegung der Schneckenwelle in eine entgegengesetzte Richtung zu widersetzen, wobei das Verfahren eine Detektierung des Zustands der Rotation der Ratschenräder ausführt, sowie eine Signalisierung des Betriebszustands der Anti-Umkehr-Vorrichtung in Abhängigkeit der Detektierung, wobei das Verfahren **dadurch gekennzeichnet ist, dass** die Signalisierung ausgeführt wird, indem der Zustand der Rotation jedes der Räder verglichen wird und indem eine Störungsanzeige in dem Fall bereitgestellt wird, bei dem die verglichenen Rotationszustände identisch sind.

FIG_1

FIG.2

FIG.3

FIG.4

**EP 1 786 668 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4762205 A